# EUROPEAN PATENT APPLICATION

(11) **EP 1 278 362 A2**
(43) Date of publication of application: **22.01.2003**
(21) Application number: 02014985.2
(22) Date of filing: 09.07.2002
(51) Int. Cl.: H04N 1/00

(54) **Image order receipt system**

(30) Priority: 13.07.2001 JP 2001213569
(71) Applicant: KONICA CORPORATION, Tokyo (JP)
(72) Inventor: Takaba, Tetsufumi, Hino-shi, Tokyo, 191-8511 (JP); Yogata, Kozue, Hino-shi, Tokyo, 191-8511 (JP); Miyata, Kyosei, Hino-shi, Tokyo, 191-8511 (JP); Kibayashi, Hiroshi, Hino-shi, Tokyo, 191-8511 (JP); Takayama, Jun, Hino-shi, Tokyo, 191-8511 (JP); Sato, Koichi, Hino-shi, Tokyo, 191-8511 (JP); Kitada, Takenori, Hino-shi, Tokyo, 191-8511 (JP)
(74) Representative: Henkel, Feiler, Hänzel

(57) **Abstract**

An image order receipt system including a client terminal for sending digital image signals; and an image order receipt apparatus having a receiving device for receiving said digital image signals, and a processor for applying an image processing unique to a photographing apparatus that has formed said digital image signals to said digital image signals so as to form digital image data.

## Description

### BACKGROUND OF THE INVENTION

The present invention relates to an image order receipt apparatus and an image order receipt system which receive orders for images photographed by photographing apparatuses such as digital cameras, etc.

Lately, there is a well-known goods providing system that lends out cameras, collects them, and provides developed film or prints. Cameras include conventional silver-halide film cameras and digital cameras.

The most popular digital camera is one that converts image signals photographed by an image pickup element, such as a CCD, into digital signals by means of an A/D conversion means and records the digital signals onto a memory card. A well-known goods providing system that makes prints from this kind of digital camera is one that receives memory cards directly from users at a DPE shop and prints out photographed images the users want.

Information technology has greatly progressed to the point where people can access a photo service company's website from home via the Internet and place an order for prints. For users who do not have an Internet connection from home, a print order system has been proposed; for example, a photo service company installs an exclusive information apparatus in convenience stores, which enables users to connect to the server managed by the photo service company and place an order for prints.

The more expensive a rental digital camera, the higher the deposit becomes. From the view point of a user who rents a digital camera, it is desirable that a rental digital camera be inexpensive and have good image quality; while, from the view point of a digital camera rental business owner, it is preferable to receive a bulk order for digital camera image prints and provide good-quality prints, etc. at reasonable prices.

Accordingly, the primary object of the present invention is to provide an apparatus and system that makes it possible to receive orders for images photographed by inexpensive photographing apparatuses.

The secondary object of the present invention is to provide an image order receipt apparatus and system that provides users with a reasonably priced photographing apparatus so that users can enjoy it as much as an expensive photographing apparatus.

### SUMMARY OF THE INVENTION

To achieve the above-mentioned objects, the present invention provides the following structures.
(1) An image order receipt system comprising:
   a client terminal for sending digital image signals; and an image order receipt apparatus including, a receiving device for receiving said digital image signals, and a processor for applying an image processing unique to a photographing apparatus that has formed said digital image signals to said digital image signals so as to form digital image data.
(2) The image order receipt system according to (1), wherein said processor forms a thumbnail image based on said digital image data and outputs said thumbnail image.
(3) The image order receipt system according to (2), wherein said processor sends said thumbnail image to said client terminal.
(4) The image order receipt system according to (3), wherein said processor sends said thumbnail image and order receipt display information about a processing order for an image corresponding to said thumbnail image to said client terminal.
(5) The image order receipt system according to (2), wherein said client terminal sends information about a processing order for an image corresponding to said thumbnail image to said image order receipt apparatus.
(6) The image order receipt system according to (4), wherein said client terminal sends information about a processing order for an image corresponding to said thumbnail image based on said order receipt display information to said image order receipt apparatus.
(7) The image order receipt system according to (5), wherein when said image order receipt apparatus receives said information about a processing order, said image order receipt apparatus is capable of correlating said digital image data with said information about a processing order, and of sending them to an image output apparatus; wherein said image order receipt system further comprising, said output apparatus for receiving said digital image data and said information about said processing order and outputting an image based on said digital image data.
(8) The image order receipt system according to (1), wherein said client terminal sends image signals, to which said image processing unique to a photographing apparatus has not been applied, to said image order receipt apparatus.
(9) The image order receipt system according to (8), wherein said client terminal sends image signals, to which said image processing unique to a photographing apparatus has not been applied after the image signals had been A/D converted by said photographing apparatus, to said image order receipt apparatus.
(10) An image order receipt apparatus comprising:
   an input device for inputting digital image signals; and a processor for applying an image processing unique to a photographing apparatus, which has generated said digital image signals, to said digital image signals so as to generate digital image data.
(11) The image order receipt apparatus according to (10), wherein said processor forms a thumbnail image corresponding to said digital image signals and outputs said thumbnail image.
(12) The image order receipt apparatus according to (11), wherein said input device comprises a means for receiving said digital image signals from a client terminal, and said processor sends said thumbnail image to said client terminal.
(13) The image order receipt apparatus according to (11), wherein said processor outputs said thumbnail image and order receipt display information about a processing order for an image corresponding to said thumbnail image.
(14) The image order receipt apparatus according to (12), wherein said input device is capable of inputting information about a processing order for an image corresponding to said thumbnail image.
(15) The image order receipt apparatus according to (13), wherein said input device is capable of inputting information about a processing order for an image corresponding to said thumbnail image based on said order receipt display information.
(16) The image order receipt apparatus according to (14), wherein when said image order receipt apparatus receives said information about a processing order, said image order receipt apparatus is capable of correlating said digital image data with said information about a processing order, and of sending them to an image output apparatus.
(17) The image order receipt apparatus according to (10), wherein said digital image signals are signals to which said image processing unique to a photographing apparatus has not been applied.
(18) The image order receipt apparatus according to (17), wherein said digital image signals are signals to which the image processing has not been applied after the signals had been A/D converted by said photographing apparatus.

### BRIEF DESCRIPTION OF THE DRAWINGS

Figure 1 is a schematic diagram that illustrates an image order receipt system which is an embodiment of the present invention.
Figure 2 is a block diagram that illustrates a digital camera which is an embodiment of the present invention.
Figure 3 shows the information flow of an embodiment according to the present invention.
Figure 4, a continuation of Figure 3, illustrates the information flow of an embodiment according to the present invention.
Figure 5 is a block diagram that illustrates a server which is an embodiment of the present invention.
Figure 6 is a flow chart that shows the operations of an embodiment according to the present invention.
Figure 7 shows the order receipt display information screen used by an embodiment according to the present invention.
Figure 8 illustrates a pull-down menu for order receipt display information shown in Figure 7.
Figure 9 shows the fee claim display information screen used by an embodiment according to the present invention.

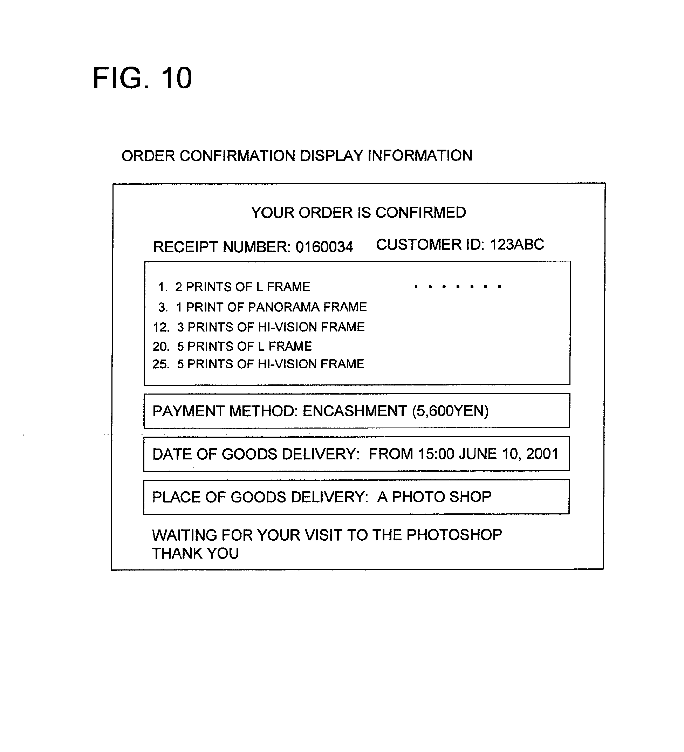

Figure 10 shows the order confirmation display information used by an embodiment according to the present invention.

### DETAILED DESCRIPTION OF THE PREFERRED EMBODIMENT

An image order receipt system, which is a first embodiment of the present invention, is an image order receipt system for receiving orders for images photographed by using a digital camera via a computer system, wherein said digital camera incorporates an imaging device, memory device, and means for converting analog signals into digital signals, but does not incorporate an image processing means for converting digital image signals into digital image data; and a client terminal comprising a means for importing digital image signals from said digital camera, means for sending the imported digital image signals to a server via a communication line and display means is connected to, via a communication line,
a server comprising a means for receiving digital image signals sent from said client terminal, image processing means for converting the digital image signals into digital image data, means for forming thumbnail image data based on the digital image data, means for creating order receipt display information including the thumbnail image data, and means for sending the order receipt display information to the client terminal.

It is preferable that said server comprises a memory means for storing said digital image data, means for forming thumbnail image data from the digital image data stored on the memory means and means for creating order receipt display information including the thumbnail image data.

It is preferable that said client terminal comprises a means for receiving the order receipt display information. The membership user can view thumbnail images on the display means (display, etc.) of the client terminal, make a choice, and place an order.

Further, it is preferable that said server comprises a fee calculation means for receiving tentative order display information including the order contents sent from said client terminal and calculating the amount billed based on the tentative order display information and means for creating fee claim display information that includes the fee and payment methods.

It is preferable that said server comprises a judgment means for receiving order display information sent from said client terminal and judging the presence or absence of changes in the order based on the order display information.

It is also preferable that said server comprises a means for creating re-order receipt display information that includes said order display information and said thumbnail image data. This allows the membership user to review the order and change the order easily.

Furthermore, it is preferable that said server comprises a means for creating order confirmation display information. When said order display information does not contain any changes, it becomes completed order information. Therefore, sending the order confirmation display information to the membership user's client terminal functions as a means for notifying the membership user that the order is to be processed.

It is also preferable that said server comprises a means for instructing the processing according to said order display information. Instructions provided by said processing instruction means include instructions for sending the ordered digital image data to said client terminal and instructions for sending digital image data including at least ordered digital image data and said order display information to an information apparatus that is installed in a photo shop with a membership system.

Moreover, a server that communicates with said client terminal can be a different server that comprises said image processing means, a means for forming thumbnail image data, and means for creating order receipt display information including the thumbnail image data.

An image order receipt method, which is a second embodiment of the present invention, is an image order receipt method for receiving, via a computer system, orders for images photographed by using a digital camera that incorporates an imaging device, memory device, and means for converting analog signals into digital signals, but does not incorporate an image processing means for converting digital image signals into digital image data;
under the control of the client system, comprising the steps of installing digital image signal import program to import digital image signals as image information photographed by said digital camera,
importing digital image signals from a digital camera which has photographed images in it, and
sending the imported digital image signals to a server via a communication line; and
under the control of the server system, comprising the steps of receiving said digital image signals sent from the client terminal via a communication line,
converting the digital image signals into digital image data by an image processing means,
forming thumbnail image data based on the digital image data, creating order receipt display information including the thumbnail image data, and
sending the order receipt display information to the client terminal.

In the step of installing said digital image signal import program, it is possible to use a dedicated removable medium, such as a CD-ROM, etc., or to download and install the digital image signal import program from said server via the Internet.

Further, under the control of the server system, it is preferable that there is a step of storing said digital image data on the server's memory means and forming thumbnail image data based on the stored digital image data.

Under the control of the server system, it is also preferable that there is a step of creating order receipt display information including said thumbnail image data and sending the order receipt display information to said client terminal.

Furthermore, it is preferable that, under the control of the client system, there are a step of receiving the order receipt display information sent from the server and a step of sending tentative order display information including the order contents to said server; and under the control of the server system, there is a step of receiving the tentative order display information, calculating the amount billed based on the tentative order display information, creating fee claim display information including the fee and payment methods and sending the fee claim display information to the client terminal.

It is also preferable that, under the control of the client system, there is a step of sending order display information to said server; and under the control of the server system, there is a step of receiving the order display information and judging the presence or absence of changes in the order based on the order display information.

Furthermore, it is preferable that, under the control of the server system, when said order display information contains changes, there is a step of creating re-order receipt display information that includes the order display information and said thumbnail image data and sending the re-order receipt display information to said client terminal.

It is preferable that, under the control of the server system, when said order display information does not contain any changes, there is a step of creating order confirmation display information and sending the order confirmation display information to the said client terminal.

Moreover, under the control of the server system, it is preferable that there is a step of instructing the processing according to said order display information. Instructions include instructions for sending ordered digital image data to said client terminal and instructions for sending digital image data including at least ordered digital image data and said order display information to an information apparatus that is installed in a photo shop with a membership system.

A server system, which is a third embodiment of the present invention, is a server system for receiving orders for images photographed by using a digital camera that incorporates an imaging device, memory device, and means for converting analog signals into digital signals, but does not incorporate an image processing means for converting digital image signals into digital image data, comprising:
a means for receiving digital image signals which has been imported from said digital camera into the client terminal and sent from the client terminal via a communication line, an image processing means for converting the digital image signals to digital image data,
a means for forming thumbnail image data based on the digital image data,
a means for creating order receipt display information including the thumbnail image data, and
a means for sending the order receipt display information to the client terminal.

It is preferable that said server system comprises a memory means for storing said digital image data and means for forming thumbnail image data based on the digital image data.

It is also preferable that said server system comprises a means for creating order receipt display information including said thumbnail image data and means for sending the order receipt display information to said client terminal.

Furthermore, it is preferable that said server system comprises a fee calculation means for receiving tentative order display information including the order contents sent from said client terminal and calculating the amount billed based on the tentative order display information and a means for creating fee claim display information that includes the fee and payment methods.

It is preferable that said server system comprises a judgment means for receiving order display information sent from said client terminal and judging the presence or absence of changes in the order based on the order display information.

Further, it is preferable that said server system comprises a means for creating re-order receipt display information that includes said order display information and said thumbnail image data.

It is also preferable that said server system comprises a means for creating order confirmation display information.

Furthermore, it is preferable that said server system comprises a means for instructing the processing according to said order display information. Instructions include instructions for sending ordered digital image data to said client terminal and instructions for sending digital image data including at least ordered digital image data and said order display information to an information apparatus that is installed in a photo shop with a membership system.

Moreover, in said server system, a server that communicates with said client terminal can be a different server that comprises said image processing means, means for forming thumbnail image data and means for creating order receipt display information including the thumbnail image data.

A fourth embodiment of the present invention is a method for receiving, on the server system side, orders for images photographed by using a digital camera that incorporates an imaging device, memory device, and means for converting analog signals into digital signals, but does not incorporate an image processing means for converting digital image signals into digital image data. The method includes the steps of:
receiving said digital image signals sent from the client terminal via a communication line,
converting the digital image signals into digital image data by an image processing means,
forming thumbnail image data based on the digital image data, creating order receipt display information including the thumbnail image data, and
sending the order receipt display information to the client terminal.

It is preferable that said method includes the step of storing said digital image data on said server's memory means and the step of forming thumbnail image data based on the stored digital image data.

Further, it is preferable that said method includes the step of creating order receipt display information including said thumbnail image data and sending the order receipt display information to said client terminal.

It is also preferable that said method includes the step of receiving tentative order display information including the order contents sent from said client terminal, calculating the amount billed based on the tentative order display information, creating fee claim display information that includes the fee and payment methods, and sending the fee claim display information to the client terminal.

Furthermore, it is preferable that said method includes the step of receiving the order display information sent from said client terminal and judging the presence or absence of changes in the order based on the order display information.

When said order display information contains changes, it is preferable that said method includes the step of creating re-order receipt display information that includes the order display information and said thumbnail image data and sending the re-order receipt display information to said client terminal.

When said order display information does not contain any changes, it is preferable that said method includes the step of creating order confirmation display information and sending the order confirmation display information to the said client terminal.

Moreover, it is preferable that said method includes the step of instructing the processing according to said order display information. Instructions include instructions for sending ordered digital image data to said client terminal and instructions for sending digital image data including at least ordered digital image data and said order display information to an information apparatus installed in a photo shop with a membership system.

An image order receipt method, which is a fifth embodiment of the present invention, is an image order receipt method for receiving, via a computer system, orders for images photographed by using a digital camera that incorporates an imaging device, memory device, and means for converting analog signals into digital signals, but does not incorporate an image processing means for converting digital image signals into digital image data;
under the control of the client system, comprising the steps of installing digital image signal import program to import digital image signals as image information photographed by said digital camera,
importing the digital image signals from a digital camera which has photographed images in it, and
sending the imported digital image signals to a server via a communication line;
under the control of the server system, comprising the steps of receiving said digital image signals sent from the client terminal via a communication line,
converting the digital image signals into digital image data by an image processing means,
forming thumbnail image data based on the digital image data, creating order receipt display information including the thumbnail image data, and
sending the order receipt display information to the client terminal; and
under the control of the client system, further comprising the steps of
receiving said order receipt display information and sending order display information, which indicates that the digital image data is sent to said client terminal, to said server; and
under the control of the server system, further comprising the steps of
receiving the order display information sent from said client terminal and sending the ordered digital image data to the client terminal.

A sixth embodiment of the present invention is a method for receiving, on the server system side, orders for images photographed by using a digital camera that incorporates an imaging device, memory device, and means for converting analog signals into digital signals, but does not incorporate an image processing means for converting digital image signals into digital image data. The method includes the steps of
receiving digital image signals sent from the client terminal via a communication line,
converting the digital image signals into digital image data by an image processing means,
forming thumbnail image data based on the digital image data, creating order receipt display information including the thumbnail image data,
sending the order receipt display information to the client terminal.
receiving order display information, sent from the client terminal, which indicates that the digital image data is sent to the client terminal; and
sending the ordered digital image data to the client terminal.

An image order receipt apparatus, which is a seventh embodiment of the present invention, is an image order receipt apparatus for receiving, via a computer system, orders for images photographed by using a digital camera that incorporates an imaging device, memory device, and means for converting analog signals into digital signals, but does not incorporate an image processing means for converting digital image signals into digital image data, comprising:
a means for receiving digital image signals as image information which has been photographed by using said digital camera and sent from a first information apparatus via a communication line;
a means for converting the digital image signals into digital image data by an image processing means;
a memory means for storing the digital image data;
a means for forming thumbnail image data based on the digital image data;
a means for creating order receipt display information including the thumbnail image data;
a means for sending the order receipt display information to the first information apparatus or a second information apparatus designated by the first information apparatus;
a fee calculation means for receiving tentative order display information including the order contents sent from the first or the second information apparatus and calculating the amount billed based on the tentative order display information;
a means for creating fee claim display information that includes the fee and payment methods;
a means for sending the fee claim display information to the first or the second information apparatus;
a means for receiving order display information from the first or the second information apparatus;
a judgment means for judging the presence or absence of changes in the order based on the order display information; a means for creating re-order receipt display information that includes the order display information and the thumbnail image data;
a means for creating order confirmation display information; and
a means for instructing the processing according to the order display information.

It is preferable that said first information apparatus be a personal computer belonging to the membership user and connected to the Internet; and also be an information apparatus having a dedicated communication function and installed in photo shops with a membership system or an information apparatus having a dedicated communication function and installed in convenience stores or the like. In the event of a personal computer belonging to the user, it is necessary to install digital image signal import software to import digital image signals as image information photographed by using said digital camera. It is possible to use a dedicated CD-ROM or to download said digital image signal import program from said image order receipt apparatus via the Internet and install it. Said second information apparatus can be a personal computer that belongs to the user who places an order for images and is connected to the Internet, or a personal computer that belongs to the user's family, relatives, or friends and is connected to the Internet.

Program, which is an eighth embodiment of the present invention, is program for receiving, via a computer system, orders for images photographed by using a digital camera that incorporates an imaging device, memory device, and means for converting analog signals into digital signals, but does not incorporate an image processing means for converting digital image signals into digital image data, whereby enabling a computer to function as:
a means for receiving digital image signals as image information which has been photographed by using a said digital camera and sent from a first information apparatus via a communication line;
a means for converting the digital image signals into digital image data by an image processing means;
a memory means for storing the digital image data;
a means for forming thumbnail image data based on the digital image data;
a means for creating order receipt display information including the thumbnail image data;
a means for sending the order receipt display information to the first information apparatus or a second information apparatus designated by the first information apparatus;
a fee calculation means for receiving tentative order display information including the order contents sent from the first or the second information apparatus and calculating the amount billed based on the tentative order display information;
a means for creating fee claim display information that includes the fee and payment methods;
a means for sending the fee claim display information to the first or the second information apparatus;
a means for receiving order display information from the first or the second information apparatus;
a judgment means for judging the presence or absence of changes in the order based on the order display information; a means for creating re-order receipt display information that includes the order display information and the thumbnail image data;
a means for creating order confirmation display information; and
a means for instructing the processing according to the order display information.

A digital camera, which is an ninth embodiment of the present invention, is a digital camera that incorporates an imaging device, memory device, and means for converting analog signals into digital signals, but does not incorporate an image processing means for converting digital image signals into digital image data, wherein
digital image signals as image information are sent to the server from an information apparatus via a communication line and are converted into digital image data by the server's digital image processing means. The most popular information apparatus is a client terminal. The digital camera according to the present invention does not incorporate an image processing means for converting digital image signals into digital image data, thereby reducing costs and making it possible to reasonably rent this type of cameras to users.

A "computer system" in the present invention includes client terminals from which users send digital image signals via a communication line and a server which receives the digital image signals sent from the client terminals and converts them into digital image data. Also, in the broader concept, it includes first information apparatuses including client terminals and image order receipt apparatuses for receiving digital image signals sent from the first information apparatuses. It is preferable that the server be a general-purpose apparatus while an image order receipt apparatus be a special-purpose machine. Furthermore, it also includes second information apparatuses which are designated by first information apparatuses. Generally, the second information apparatus is a personal computer used as a client terminal.

A "communication line" in the present invention is a communication line that enables digital image signals, digital image data, etc. to be sent and received between the first information apparatus including a client terminal and the server including an image order receipt apparatus. The most popular communication line is the Internet, and any communication means, such as an exclusive line connection, dial-up connection, CATV connection, etc. which is fast enough to transmit order information, digital image signals and digital image data used by the present invention is included.

A "digital image signal" in the present invention is a digital signal which has been converted (A/D conversion) from analog signals output from an image pickup element, such as a CCD, CMOS, etc. Before A/D conversion, it is possible to conduct the pre-processing, such as CDS processing (correlation double sampling, etc.) for sample-and-hold and noise reduction, and band-limit processing (lowpass filter, etc.); however, it is preferable not to apply the CDS processing or band-limit processing to signals because by doing so it is possible to simplify the structure of the photographing apparatus, thereby reducing the photographing apparatus cost. Furthermore, it is preferable not to apply any processing to digital signals after the A/D conversion because by doing so it is possible to simplify the structure of the photographing apparatus, thereby reducing the photographing apparatus cost. Moreover, it is preferable not to apply any processing, such as color separation and color conversion processing (matrix conversion, conversion from RGB to YCrCb, and conversion from complementary color to primary color) to signals after the A/D conversion.

"Digital image data" in the present invention is image processed signals into which said digital image signals have been converted. Image processing includes noise reduction, band limit, color interpolation (mosaic, etc.), color separation, color conversion (matrix conversion, conversion from RGB to YCrCb, conversion from complementary color to primary color, etc.), gradation conversion (gamma correction, etc.), white balance, outline correction, pixel defect correction, compression (JPEG, etc., reversible, irreversible), and file conversion (conversion to general-purpose image formats, such as JPEG, TIFF, etc.), etc.
In the present invention, "unique to a photographing apparatus" includes "unique to each photographing apparatus", "unique to each type of photographing apparatus" and "unique to each photographing apparatus manufacturer". "Image processing unique to a photographing apparatus" is aforesaid image processing, and preferably, it includes at least one of the following processing: color separation, color conversion, or conversion of image signals unique to a photographing apparatus into general-purpose image formats.

Hereinafter, an embodiment of the present invention will be described in reference to the drawings.

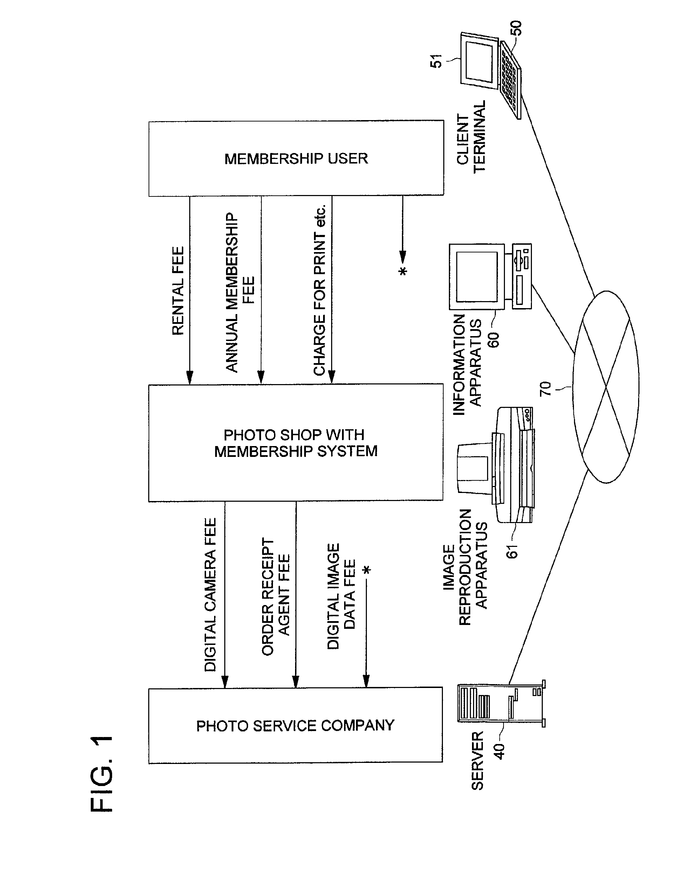

Figure 1 is a schematic diagram that illustrates an image order receipt system according to this embodiment. In reference to Figure 1, the business model mechanism for this embodiment will be described. An image order receipt system of this embodiment is for a computer system, in which a server 40 that is managed or operated by a photo service company, membership users' client terminals 50 (generally, a personal computer with a browser installed on it and connected to the Internet), and an information apparatus 60 that is installed in photo shops with a membership system are all interconnected to one another via a communication line 70 such as the Internet.

Further, an image reproduction apparatus, such as a digital minilab, is installed in photo shops with a membership system.

The photo service company sells digital cameras according to the present invention to photo shops with a membership system. The photo shops with a membership system provide digital camera rental services to membership users. This digital camera does not have a built-in image processing means (means for conducting image processing unique to a photographing apparatus) for converting digital image signals unique to a photographing apparatus into digital image data. Therefore, it is impossible for this type of digital camera to import photographed images into a personal computer for viewing, as an ordinary digital camera can do. A membership user takes a photograph by using a digital camera according to the present invention, imports the digital image signals into the membership user's own client terminal 50, and sends them to the server 40 managed by a photo service company via a communication line 70. The server 40 managed by the photo service company converts the digital image signals to digital image data, forms thumbnail image data, and sends it to the membership user's client terminal 50. This allows the membership user to view the thumbnail images on the display means 51, such as a liquid crystal display etc., of the membership user's own client terminal 50 and place an order for images. Available order options are an image processing service in the form of prints, or CD-Rs and a service to transmit digital image data into the membership user's own client terminal. Print and CD-R services are available from photo shops with a membership system which have contracts with the photo service company. Digital image data of the images ordered by a membership user is sent from the server 40 managed by the photo service company to an information apparatus 60 installed in the photo shop via a communication line. The photo shop, which has an image reproduction apparatus 61, makes prints or CD-Rs from the transmitted digital image data and provides them for the membership user. The membership user can choose any convenient photo shop. Moreover, when a membership user wants digital image data, the server 40 managed by the photo service company sends digital image data to the membership user's client terminal 50. In the present invention, the server 40 converts digital image signals sent from a client terminal 50 into digital image data, forms thumbnail image data, sends it to the client terminal 50, displays the thumbnail images on the display means 51, and then sends the digital image data corresponding to the ordered images to the client terminal 50. This kind of service is considered to be a desirable service for membership users.

Next, monetary transaction flow will be described. A photo shop with a membership system books the sales from annual membership fees, digital camera rental fees, and print and CD-R fees from membership users. A photo service company books the sales from digital camera fees and order-receipt agent fees from photo shops with a membership system. The photo service company converts digital image signals to digital image data, provides membership users with thumbnail images, and receives orders for prints, etc. It also provides services for storing and managing digital image data, etc. for a certain period of time. The photo service company consigns the processing of orders for prints, etc. to the photo shops with a membership system, and therefore needs to be reimbursed for their expenses for this service. The order-receipt agent fee is for the collection of the expense. Furthermore, the photo service company provides digital image data according to a membership user's request. A digital image data fee is directly paid by the membership user to the photo service company.

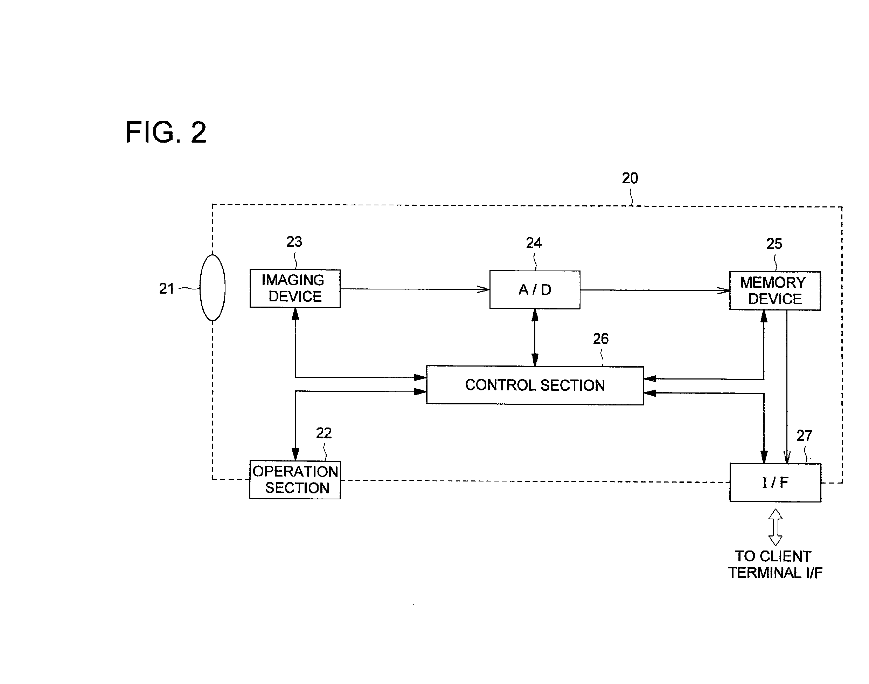

Figure 2 is a block diagram showing a digital camera according to the present invention. The digital camera 20 consists of an imaging device 23 that includes photo lens 21 made by plastic injection molds and an image pickup element, such as a CCD, etc.; an operation section 22 that includes a shutter button; an analog/digital (A/D) conversion circuit 24 that converts analog color image signals sent from the imaging device 23 into digital signals; a memory device 25 that includes a memory element, such as RAM which stores digital image signals, flash memory, etc.; and a control section 26 that controls the entire system. The interface (I/F) 27 between the system and client terminals uses a universal serial bus (USB), IrDA using infrared light, or wireless Bluetooth, etc.

A digital camera according to the present invention does not have an image processing means for converting the digital image signals to digital image data. To convert digital image signals to digital image data, it is necessary to connect a digital camera which has photographed images in it to a client terminal 50 where the digital image signal import program has been installed, import the digital image signals into the client terminal 50, and then send the signals to the server 40 having an image processing means that converts the digital image signals to digital image data.

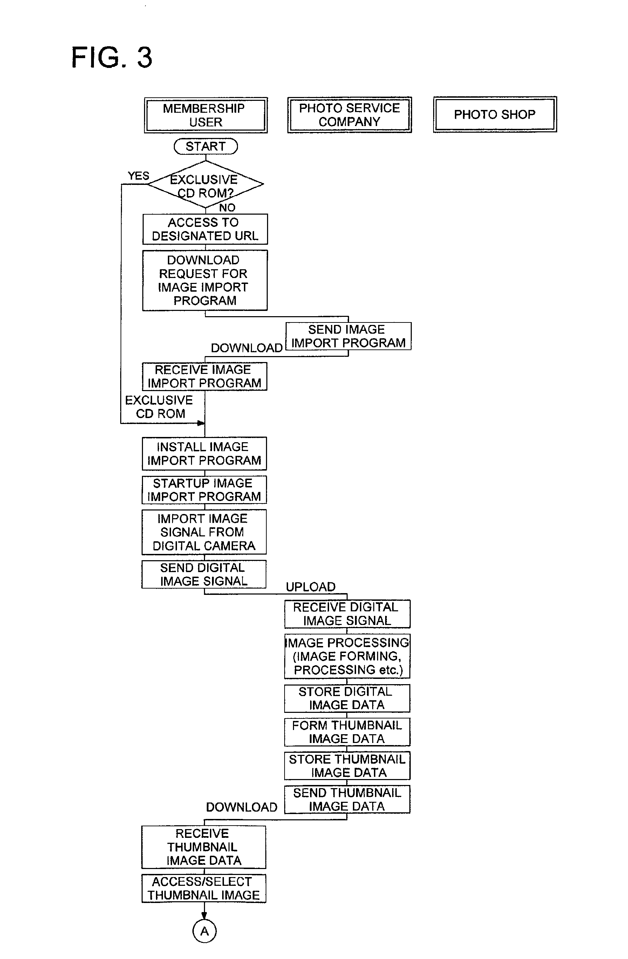

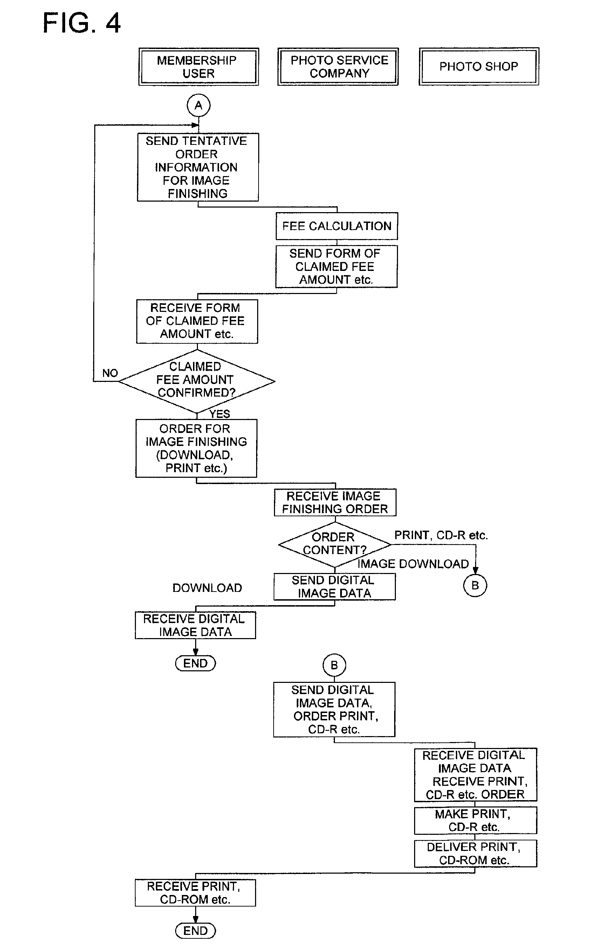

Next, information flow of the image-order receipt system according to the present invention in reference to Figures 3 and 4. The flow of information goes from Figure 3 to Figure 4. Herein, the example uses a membership user who has a client terminal 50 at home.

A membership user obtains a dedicated CD-ROM, and installs the digital image signal import program into the client terminal 50. If a user cannot obtain a dedicated CD-ROM, the user accesses a website designated by the photo service company via the Internet, and requests that the digital image signal import program be downloaded. Then, the server 40 managed by the photo service company sends the digital image signal import program to the client terminal 50. After the digital image signal import program has been installed on the client terminal 50, the digital image signal import program starts, and imports digital image signals into the client terminal 50 from a digital camera according to the present invention which has photographed images in it. The digital image signals imported into the client terminal 50 are sent to the server 40 managed by the photo service company via a communication line 70.

The server 40 converts the digital image signals into digital image data and stores it onto the memory. The storage period can be decided according to the photo service company's policy; however, it is generally one year or until a user's membership period expires. The server 40 forms thumbnail image data from the digital image data. It is preferable that the thumbnail image data be stored on the memory for a certain period of time; however, the storage period may be shorter than that of the digital image data. The thumbnail image data is sent to the client terminal 50, and thumbnail images are displayed on the display means 51. The membership user views the thumbnail images on the display means 51, and places a tentative order for the image processing. The tentative order is conducted according to the instructions that appear on the screen of the display means 51.

The server 40 that receives the tentative order calculates the fee, creates information about the amount of the fee, etc. in the specified form, and sends it to the client terminal 50. The membership user can review the claimed fee amount through the fee claim display information displayed on the display means 51. If the membership user would like to change the order, changes are possible; while if the membership user specifies the payment method for the claimed fee and sends the information to the server 40, the order is completed. Once an order has been completed, the server 40 sends confirmation information that includes the deliver method and date of delivery to the client terminal 50, and proceeds to process the order. Available order options that membership users can place include prints for various sizes (E frame, L frame, P frame, panorama frame, hi-vision frame, etc.), CD-Rs, or installation of digital image data onto a client terminal 50. When an order for prints or CD-Rs has been placed, the server 40 sends information including the order contents to an information apparatus 60 installed in the photo shop with a membership system designated by the membership user. In the photo shop, data is transferred from the information apparatus 60 to an image reproduction apparatus 61, such as a digital minilab, to process specified print finishing or CD-R finishing. The membership user receives the finished products in exchange for cash. When there is an order to transmit digital image data to a client terminal 50, the server 40 sends the digital image data corresponding to the ordered images to the client terminal 50. In this case, the fee can be paid to the photo service company by credit card, electronic money, or bank transfer.

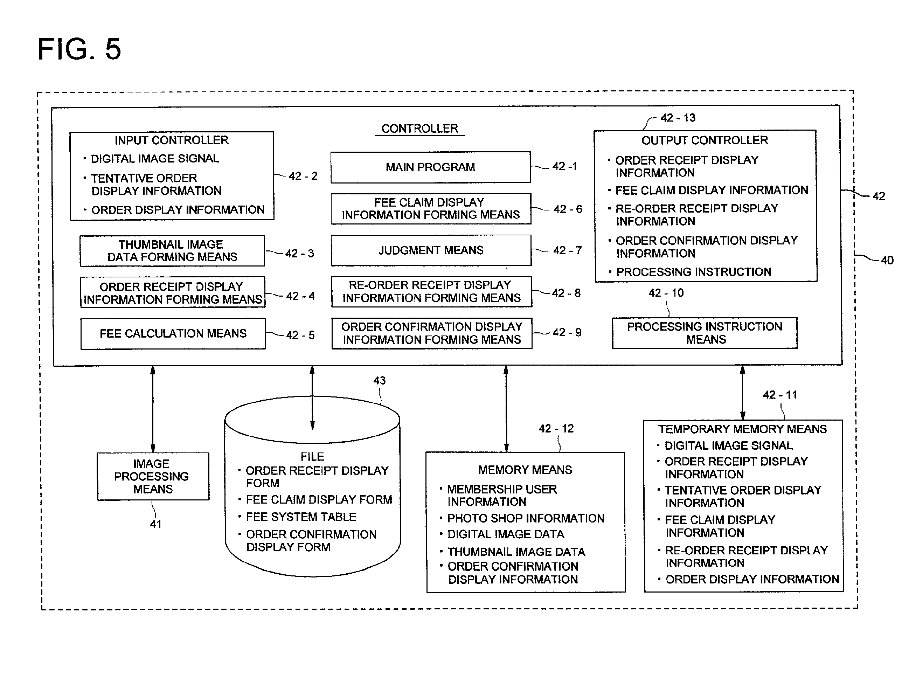

Next, the detailed structure of the server 40 will be described. Figure 5 is a block diagram showing the structure of the server 40.

In Figure 5, reference number 42 represents a controller consisting of a CPU (not shown), etc. performs controls according to the main program 42-1. Reference number 43 represents a file that contains an order receipt display form, fee claim display form, fee system table, and order confirmation display form. The order receipt display form is the basis of the order receipt display information, described hereinafter, and the fee claim display form is the basis of the fee claim display information. The fee system table used for calculating fees contains basic data for the fee calculation, described hereinafter.

Reference number 42-2 represents an input controller that controls a means for receiving information (digital image signals, tentative order display information, and order display information) sent from a client terminal 50 via a communication line 70 such as the Internet. Reference number 41 represents an image processing means for converting digital image signals sent from the client terminal 50 into digital image data. Reference number 42-3 represents a means for forming thumbnail image data from the digital image data formed by the image processing means 41. Reference number 42-4 represents an order receipt display information creating means for extracting an order receipt display form from the file 43 and creating order receipt display information by combining the form with the thumbnail image data. Reference number 42-5 represents a fee calculation means for calculating a fee based on the fee system table contained in the file 43 according to the tentative order display information sent from the client terminal 50. Reference number 42-6 represents a fee claim display information creating means for extracting a fee claim display form from the file 43 and creating fee claim display information by combining the form with the fee which has been calculated by the fee calculation means. Reference number 42-7 represents a judgment means for judging whether the order display information sent from the client terminal 50 contains changes or not. Reference number 42-8 represents a re-order receipt display information creating means for creating re-order receipt display information by combining the order display information and thumbnail image data when the judgment means 42-7 judges that the order display information sent from the client terminal 50 contains changes. Re-order receipt display information is order receipt display information that appears on the display means 51 of the client terminal 50 for placing a re-order. It is convenient for membership users because they can place a re-order by reviewing the previous order. Reference number 42-9 represents an order confirmation display information creating means for extracting an order confirmation display form from the file 43 and creating order confirmation display information by combining the form with the order display information when the judgment means 42-7 judges that the order display information sent from the client terminal 50 does not contains any changes. Reference number 42-10 represents a processing instruction means for instructing the processing according to said order display information. The processing instructions include instructions to the information apparatus 60 installed in the photo shop with a membership system for making prints or CD-Rs and also include instructions to the server 40 for sending digital image data to the client terminal 50.

Reference number 42-11 represents a temporary memory means for storing information that can be deleted after a certain period of time. This information includes information that is sent from a client terminal 50 to the server 40, such as digital image signals, tentative order display information, and order display information; and information that is created by the server 40 and sent to the client terminal 50, such as order receipt display information, fee claim display information, and re-order receipt display information. Reference number 42-12 represents a memory means for storing information that has to be stored for a relatively long period of time. The storage period varies depending on the information; however, the photo service company may determine according to its policy. The information includes information about photo shops with a membership system, information about membership users who place image orders, digital image data converted from the customer's digital image signals, thumbnail image data formed from the digital image data, and order confirmation display information that is created by the server and sent to the customer. Reference number 42-13 represents an output controller that controls a means for sending information (order receipt display information, fee claim display information, re-order receipt display information, order confirmation display information, and processing instruction information) that is output to the client terminal 50.

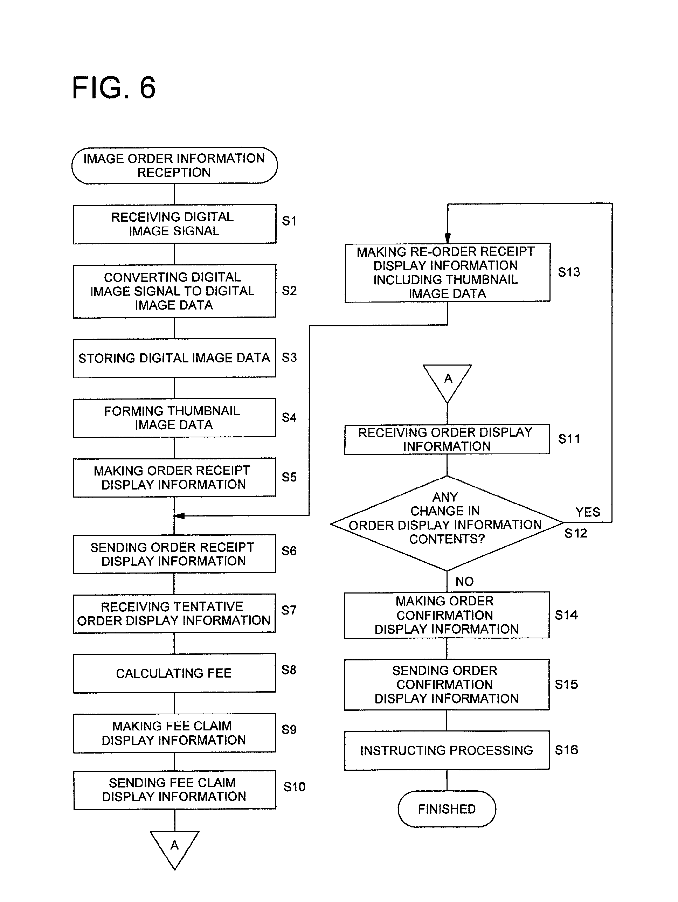

Next, the operations of this embodiment will be described. A membership user makes a request that images photographed by using a digital camera according to the present invention be made into finished prints, processed onto a CD-R, or electronically stored as digital image data onto the user's own PC (client terminal) 50. Figure 6 is a flow chart that illustrates a process flow that begins when a photo service company's server 40 receives an image order from a membership user's client terminal 50 and ends when the server provides instructions for processing the membership user's order.

In Step S1, shown in Figure 6, a server 40 receives digital image signals sent from a client terminal 50. The digital image signals are temporarily stored in a temporary memory means 42-11. At this point, the server 40 is supposed to be connected to the client terminal 50 via a communication line 70 such as the Internet. Also, it is assumed that the digital image signal import program has been installed on the client terminal 50 and digital image signals have been imported from a digital camera according to the present invention which has photographed images in it. The digital image signals received in Step S1 are output from the temporary memory means 42-11 in Step S2, and converted into digital image data by an image processing means 41. In Step S3, digital image data is stored in the memory means 42-12. It is preferable that the digital image data be stored on the memory means 42-12 until the user's membership expires so that an order request from the membership user can be accepted.

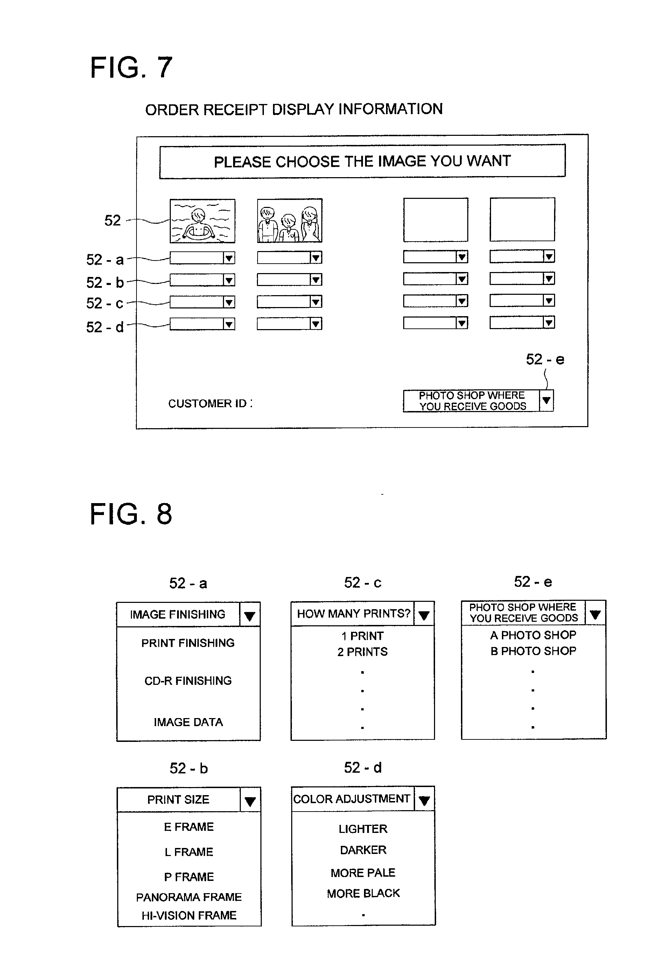

In Step S4, thumbnail image data is formed from the digital image data stored in the memory means 42-12. In Step S5, thumbnail image data formed in Step S4 and an order receipt display form extracted from the file 43 are combined into order receipt display information that includes thumbnail image data. In Step S6, the controller 42 sends order receipt display information created in Step S5 to the client terminal 50 that belongs to the membership user who placed an order, and displays the order receipt display information screen, shown in Figure 7, on the display means 51 of the client terminal 50. The membership user can view thumbnail images 52 on the order receipt display information screen and place an order for images. Types of image processing can be chosen from a pull-down menu 52-a. The available types include prints, CD-Rs, and transmission of digital image data to the client terminal 50. The print size and the number of prints can be chosen from pull-down menus 52-b and 52-c, respectively. Also, color adjustment to make the image lighter or darker can be chosen from a pull-down menu 52-d. A photo shop can also be chosen from a pull-down menu 52-e so that the membership user can go to a convenient location to receive the finished product. Furthermore, optional menus can be added. Figure 8 shows the pull-down menus 52-a through 52-e described in Figure 7.

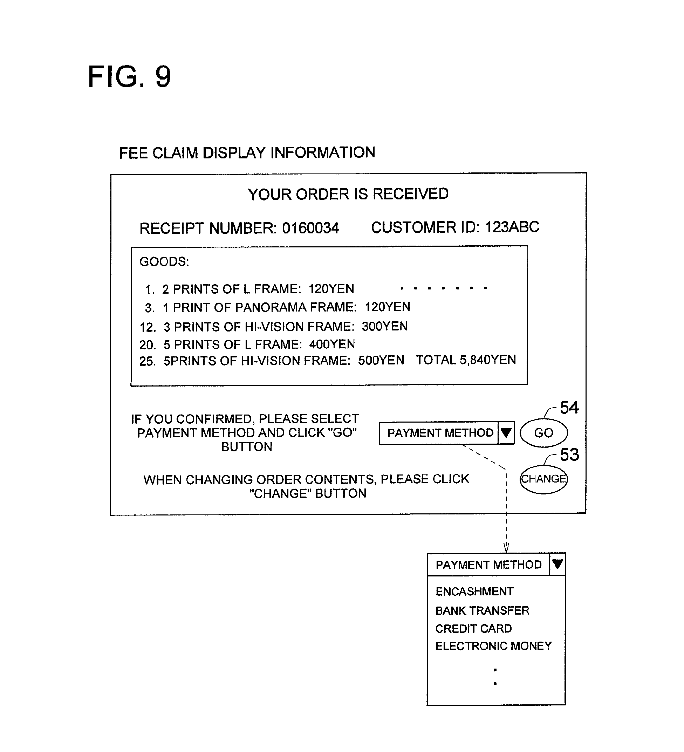

A membership user views thumbnail images on the order receipt display information screen 52 that appears on the display means 51 of the client terminal 50 and places an order. This order request is sent from the client terminal 50 to the server 40 as tentative order display information. In Step S7, the server 40 receives the tentative order display information sent from the client terminal 50. The server 40 that received the tentative order display information calculates the fee in Step S8. A fee system table is extracted from the file 43 and the fee is calculated by a fee calculation means 42-5 according to the tentative order display information. In Step S9, the fee calculated in Step S8 and a fee claim display form extracted from the file 43 are combined into fee claim display information that includes the fee and the payment method. In Step S10, the controller 42 sends fee claim display information created in Step S9 to the client terminal 50 that belongs to the membership user who placed an order. Then, the fee claim display information screen, shown in Figure 9, appears on the display means 51 of the client terminal 50. The fee claim display information screen displays the receipt number, customer ID, order contents, fee, Change button 53, payment methods, and GO button 54. The membership user reviews the fee claim display information displayed on the display means 51 of the client terminal 50; and if the fee has exceeded the user's budget due to too many orders, the user clicks on the Change button 53 by using a mouse (not shown) attached to the client terminal 50. When there is no change in the order, the membership user selects a desirable payment method from a payment method pull-down menu, and clicks on the GO button 54 by using a mouse (not shown) attached to the client terminal 50. The membership user clicks either the Change button 53 or the GO button 54 with respect to the fee claim display information displayed on the display means 51 of the client terminal 50 to send the request to the server 40. The membership user's request is sent from the client terminal 50 to the server 40 as order display information. In Step S11, the server 40 receives the order display information from the client terminal 50.

In Step S12, judgment is made about whether the Change button 53 or the GO button 54 has been selected with respect to the order display information received in Step S11. When the Change button 53 has been selected, it is judged that the order display information contains changes. This means that the membership user would like to change the contents of the tentative order display information. When the GO button 54 has been selected, it is judged that the order display information does not contain any changes. This means that the membership user accepts the contents of the tentative order display information and would like to complete the order.

In Step S12, when the judgment means 42-7 judges that the order display information received in Step S10 contains changes, the controller 42 advances the process to Step S13. In Step S13, the re-order receipt display information creating means 42-8 combines the order display information with thumbnail image data stored in the memory means 42-12 to form re-order receipt display information that includes the thumbnail image data and the tentative order display information. The controller 42 sends re-order receipt display information created in Step S13 to the client terminal 50 that belongs to the membership user who sent the tentative order display information and displays the re-order receipt display information screen on the display means 51 of the client terminal 50. The membership user can place a re-order by using the re-order receipt display information.

In Step S12, when the judgment means 42-7 judges that the order display information received in Step S11 does not contain any changes, the controller 42 advances the process to Step S14. In Step S14, the order confirmation display information creating means 42-9 extracts an order confirmation display form from the file 43, also extracts order display information from the temporary memory means 42-10, and combine them into order confirmation display information. In Step S15, the controller 42 sends the order confirmation display information created in Step S14 to the client terminal 50 that belongs to the membership user who placed an order and displays the order confirmation display information screen on the display means 51 of the client terminal 50. The order confirmation display information screen displays the receipt number, customer ID, order contents, payment methods, date of delivery, and place of delivery.

In Step S16, the processing instruction means reads order confirmation display information from the memory means 42-12 and executes processing instructions according to the order contents. When the order is a request for transmission of digital image data to the client terminal 50, the processing instruction means 42-10 extracts digital image data corresponding to the requested images from the memory means 42-12. The controller 42 sends the digital image data to the client terminal 50. When the order is for making prints or processing CD-Rs, the processing instruction means 42-10 searches photo shop information stored in the memory means 42-12, obtains the address of the information apparatus 60 installed in the photo shop with a membership system designated by the membership user, and extracts order confirmation display information and digital image data corresponding to the ordered images from the memory means 42-12. The controller 42 sends the order confirmation display information and digital image data to the information apparatus 60 installed in the photo shop with a membership system designated by the membership user.

The photo shop with a membership system processes the digital image data according to the order confirmation display information sent from the photo service company and provides a finished product to the membership user.

As mentioned above, in this embodiment, an image processing means for conducting image processing unique to a photographing apparatus is installed in the photo service company's server 40, not in each photo shop's information apparatus 60, thereby eliminating the necessity to distribute image processing software for conducting image processing unique to a photographing apparatus to each photo shop. It is also not necessary to upgrade such software or distribute new software for newly released photographing apparatuses to each photo shop. Furthermore, it is possible to quickly respond to an upgrade of the software or newly released photographing apparatuses, thereby improving the user service quality.

Thus, in this embodiment, a mechanism for sending digital image signals from the client terminal to the photo service company's server 40 has been described. This structure makes it possible to identify a user who has a photographing apparatus; therefore, when a photographing apparatus is rented to the user, collection and management of the photographing apparatus can be facilitated. Furthermore, in this embodiment, although the mechanism for sending digital image signals from the client terminal to the photo service company's server 40 has been described, the present invention is not limited to this example. It can also apply to a situation when a user takes a removable memory that stores digital image signals to a photo service company where a server 40 reads the digital image signals from the removable memory, or a situation when a user takes a photographing apparatus that stores digital image signals to a photo service company where the server 40 reads the digital image signals directly from the photographing apparatus. However, recording image signals onto a built-in memory can eliminate a mechanism for mounting a removable memory, thereby eliminating the space for mounting the removable memory and also eliminating an interface for inputting and outputting image signals to and from the removable memory. As a result, it is possible to reduce apparatus size and price, increase image signal input/output speed and improve user's usability. Moreover, if a user takes a photographing apparatus to a photo service company where the server 40 reads digital image signals directly from the photographing apparatus, the used photographing apparatus can be returned to the photo service company, thereby making it possible to recycle the returned photographing apparatus.

The present invention has been described by showing embodiments; however, the present invention is not limited to those embodiments. As will be understood by those skilled in the art, various changes and improvements can be performed within the limitations of the present invention concept. For example, it is also possible to form thumbnail image data, as shown in Step S4, before storing the digital image data, converted from digital image signals, onto the memory means 42-12. Further, in Step S16, the processing instruction means can also execute processing instructions based on the order display information completed by clicking the GO button 54 instead of based on the order confirmation display information as described in the flow chart shown in Figure 6. The flow chart in Figure 6 explains the case where a membership user has a client terminal 50 at home. Therefore, when a membership user makes a request for digital image data, the digital image data is sent to the client terminal that belongs to the membership user who placed the order; however, it is also possible to provide a service whereby the server 40 sends digital image data to the client terminal designated by the membership user, for example, a personal computer that belongs to the membership user's relatives or friends and is connected to the Internet. Moreover, another service is possible whereby a membership user who does not have a client terminal uses a dedicated terminal installed in a photo shop with a membership system. Thus, the scope of the protection of the present invention shall be judged in accordance with the description of the claims.

The present invention makes it possible to provide an inexpensive digital camera and also provide a computer system that receives orders for images photographed by the inexpensive digital camera.

## Claims

1. An image order receipt apparatus comprising:
an input device for inputting digital image signals; and
a processor for applying an image processing unique to a photographing apparatus, which has generated said digital image signals, to said digital image signals so as to generate digital image data.

2. The image order receipt apparatus according to claim 1, wherein said processor forms a thumbnail image corresponding to said digital image signals and outputs said thumbnail image.

3. The image order receipt apparatus according to claim 2, wherein said input device comprises a means for receiving said digital image signals from a client terminal, and said processor sends said thumbnail image to said client terminal.

4. The image order receipt apparatus according to claim 3, wherein said processor outputs said thumbnail image and order receipt display information about a processing order for an image corresponding to said thumbnail image.

5. The image order receipt apparatus according to claim 3, wherein said input device is capable of inputting information about a processing order for an image corresponding to said thumbnail image.

6. The image order receipt apparatus according to claim 4, wherein said input device is capable of inputting information about a processing order for an image corresponding to said thumbnail image based on said order receipt display information.

7. The image order receipt apparatus according to claim 5, wherein when said image order receipt apparatus receives said information about a processing order, said image order receipt apparatus is capable of correlating said digital image data with said information about a processing order, and of sending them to an image output apparatus.

8. The image order receipt apparatus according to claim 1, wherein said digital image signals are signals to which said image processing unique to a photographing apparatus has not been applied.

9. The image order receipt apparatus according to claim 8, wherein said digital image signals are signals to which the image processing has not been applied after the signals had been A/D converted by said photographing apparatus.

10. An image order receipt system comprising:
a client terminal for sending digital image signals; and
an image order receipt apparatus including a receiving device for receiving said digital image signals, and a processor for applying an image processing unique to a photographing apparatus that has formed said digital image signals to said digital image signals so as to form digital image data.

11. The image order receipt system according to claim 10, wherein said processor forms a thumbnail image based on said digital image data and outputs said thumbnail image.

12. The image order receipt system according to claim 11, wherein said processor sends said thumbnail image to said client terminal.

13. The image order receipt system according to claim 12, wherein said processor sends said thumbnail image and order receipt display information about a processing order for an image corresponding to said thumbnail image to said client terminal.

14. The image order receipt system according to claim 11, wherein said client terminal sends information about a processing order for an image corresponding to said thumbnail image to said image order receipt apparatus.

15. The image order receipt system according to claim 13, wherein said client terminal sends information about a processing order for an image corresponding to said thumbnail image based on said order receipt display information to said image order receipt apparatus.

16. The image order receipt system according to claim 14, wherein when said image order receipt apparatus receives said information about a processing order, said image order receipt apparatus is capable of correlating said digital image data with said information about a processing order, and of sending said digital image data and said information correlated to an image output apparatus; wherein said image order receipt system further comprising, said output apparatus for receiving said digital image data and said information about said processing order and outputting an image based on said digital image data.

17. The image order receipt system according to claim 10, wherein said client terminal sends image signals, to which said image processing unique to a photographing apparatus has not been applied, to said image order receipt apparatus.

18. The image order receipt system according to claim 17, wherein said client terminal sends image signals, to which said image processing unique to a photographing apparatus has not been applied after the image signals had been A/D converted by said photographing apparatus, to said image order receipt apparatus.
